# EUROPEAN PATENT SPECIFICATION

(11) **EP 3 517 767 B1**
(45) Date of publication and mention of the grant of the patent: **04.08.2021**
(21) Application number: 19151559.2
(22) Date of filing: 14.01.2019
(51) Int. Cl.: F02M 26/15, F02M 26/06, B60K 13/04, F01N 13/08, F02M 26/23, F02M 26/28, F02M 26/35

(54) **ENGINE INTAKE AND EXHAUST SYSTEM AND ENGINE EQUIPPED THEREWITH**
MOTOREINLASS- UND -AUSLASSSYSTEM UND MOTOR DAMIT
SYSTÈME D'ADMISSION ET D'ÉCHAPPEMENT DE MOTEUR ET MOTEUR ÉQUIPÉ D'UN TEL SYSTÈME

(30) Priority: 26.01.2018 JP 2018011176
(43) Date of publication of application: 31.07.2019
(73) Proprietor: Mazda Motor Corporation, Aki-gun, Hiroshima 730-8670 (JP)
(72) Inventor: YAMADA, Hisayoshi, Fuchu-cho, Aki-gun, Hiroshima 730-8670 (JP); KOJIMA, Yuji, Fuchu-cho, Aki-gun, Hiroshima 730-8670 (JP)
(74) Representative: Müller-Boré & Partner Patentanwälte PartG mbB

(56) References cited:
- DE-A1- 10 113 449
- US-A1- 2014 318 511
- US-A1- 2015 240 750

## Description

### TECHNICAL FIELD

The present disclosure relates to an engine intake and exhaust system, which includes an exhaust gas recirculation (EGR) system which recirculates a portion of exhaust gas to an intake passage. Further, the invention relates to an engine equipped with such intake and exhaust system.

### BACKGROUND OF THE DISCLOSURE

To prevent an excessive temperature increase in combustion gas and generation of nitrogen oxide (NOₓ) and to reduce a pumping loss during an intake process, engines provided with an EGR passage which recirculates a portion of exhaust gas to an intake passage are known. WO 2013 / 054 711 A1 discloses one example of a structure of such an engine, in which an EGR passage extending in up-and-down directions of the engine connects an intake passage to an exhaust passage disposed therebelow.

This EGR passage includes an upstream EGR pipe having a lower end part (an upstream end part in an EGR gas flow direction) connected to the exhaust passage, extending in the up-and-down directions, an EGR cooler connected to an upstream end part of the upstream EGR pipe, an EGR valve connected to an outlet portion of the EGR cooler, and a downstream EGR pipe connecting the EGR valve to the intake passage (intake manifold). That is, the exhaust gas (EGR gas) led out from the exhaust passage through the upstream EGR pipe is cooled by the EGR cooler, guided toward the intake side, and then is introduced into the intake passage through the downstream EGR pipe while its flow rate is adjusted by the EGR valve.

In the EGR system of WO 2013 / 054 711 A1, the upstream EGR pipe is connected to the exhaust passage at a position downstream of an exhaust emission control system (catalyst converter). Here, in WO 2013 / 054 711 A1, the exhaust emission control system is disposed vertically on the side of an engine body (i.e., the exhaust gas passes downward from the upper part). Thus, a water component within the EGR gas is condensed by the EGR cooler, and even if the condensed water flows into the exhaust passage through the upstream EGR pipe, the condensed water cannot enter (backflow into) the exhaust emission control system. However, for example, if the exhaust emission control system is disposed laterally on the side of the engine body (i.e., the exhaust gas passes horizontally from one end to the other end), once the condensed water flows through the upstream EGR pipe, it can be considered that the condensed water enters and is accumulated in the exhaust emission control system. In this case, this accumulated condensed water may cause corrosion of the exhaust emission control system. For example, for a vehicle of an FF (front-engine front-wheel) type, since sometimes it is required to dispose the exhaust emission control system laterally because of the layout in an engine bay, the condensed water entering into the exhaust emission control system as described above needs to be controlled.

US 2015 / 0 240 750 A1 discloses an exhaust device for an engine in which an EGR device and an exhaust gas processing device are disposed below a catalyst device.

US 2014 / 0 318 511 A1 discloses an exhaust gas recirculation device for internal combustion engine comprising an upstream EGR pipe having four bends provided between first and second connection sections.

### SUMMARY OF THE DISCLOSURE

The present disclosure is made in view of the above situations and aims to prevent, in an engine intake and exhaust system including an EGR valve, accumulation in an exhaust gas purifier of condensed water generated at an EGR cooler.
This object is achieved by the features of claim 1. Further developments are defined in the dependent claims.

According to one aspect of the present disclosure, an intake and exhaust system for an engine mounted on a vehicle is provided, which includes an intake passage and an exhaust passage, and an exhaust gas recirculation (EGR) passage configured to introduce a portion of exhaust gas to the intake passage as EGR gas. The exhaust passage includes an exhaust gas purifier, including an inlet part and an outlet part for the exhaust gas, that is configured to be disposed so that the exhaust gas flows substantially horizontally when mounted in the vehicle, a branch part connected to the outlet part of the exhaust gas purifier in which a channel of the exhaust gas is branched into a guide part and the EGR passage. The guide part is configured to guide the exhaust gas from the branch to the exhaust side of the engine as well as downward when mounted in the vehicle. The EGR passage includes an EGR cooler provided to an upstream end part thereof in a flowing direction of the EGR gas. The EGR cooler is provided so that the EGR gas flows substantially vertically when mounted in the vehicle, and is connected to an upper surface of the branch part such that it guides the EGR gas substantially upward when mounted in the vehicle.

According to this structure, while the engine operates, the exhaust gas is discharged from the outlet part of the exhaust gas purifier and flows to the guide via the branch, meanwhile the condensed water generated in the EGR passage flows to the branch through the EGR passage. Thus, the condensed water flowed into the branch joins the flow of the exhaust gas in the branch, and is guided along the guide to downstream of the outlet part. Therefore, the condensed water generated in the EGR passage entering (backflowing) into the exhaust gas purifier is prevented.

Note that "the exhaust gas flows substantially horizontally" means that the exhaust gas flows "substantially laterally" and includes that the exhaust gas flows laterally and obliquely in the up-and-down directions in addition to a case of flowing exactly or substantially horizontally.

Moreover, the EGR cooler may be directly connected to the branch part.

According to this structure, the condensed water generated in the EGR cooler is swiftly introduced into the exhaust passage (branch).

The EGR cooler is provided so that the EGR gas flows substantially vertically.

According to this structure, the condensed water generated in the EGR cooler is swiftly introduced into the exhaust passage.

The exhaust gas purifier may be provided with the outlet part at a first end part in substantially horizontal directions and the inlet part at a second end part above the outlet part, the outlet part being disposed at a lower end part of the exhaust gas purifier and extending substantially horizontally from the lower end part.

According to this structure, in the exhaust gas purifier, the exhaust gas flows obliquely to the downstream side from the upstream side, and the exhaust gas is led out from the outlet part while flowing along an inner bottom surface of the exhaust gas purifier. Thus, a relatively strong flow of exhaust gas is formed in the portion from the outlet part over the branch, and the backflow of the condensed water to the exhaust gas purifier is prevented.
According to a further aspect, there is provided an internal combustion engine having an intake and exhaust system, as described above.

### BRIEF DESCRIPTION OF THE DRAWINGS

Fig. 1 is a diagram illustrating a schematic structure of an engine.
Fig. 2 is a side view of the engine (a view seen in a direction II of Fig. 3).
Fig. 3 is a plan view of the engine.
Fig. 4 is an enlarged view of a main part of Fig. 2.
Fig. 5 is another side view of the engine (a view seen in a direction V of Fig. 2).
Fig. 6 is a cross-sectional view of an upstream intake passage (mainly an inclining part).
Fig. 7 is another side view of the engine (a view seen in a direction VII of Fig. 2).
Fig. 8 is an enlarged side view of a main part of the engine (a view seen in a direction VIII of Fig. 3).
Fig. 9 is a plan view of a downstream exhaust passage (a part around a branch part).

### DETAILED DESCRIPTION OF THE DISCLOSURE

Hereinafter, one embodiment of the present disclosure is described with reference to the accompanying drawings.

### [Schematic Structure of Engine]

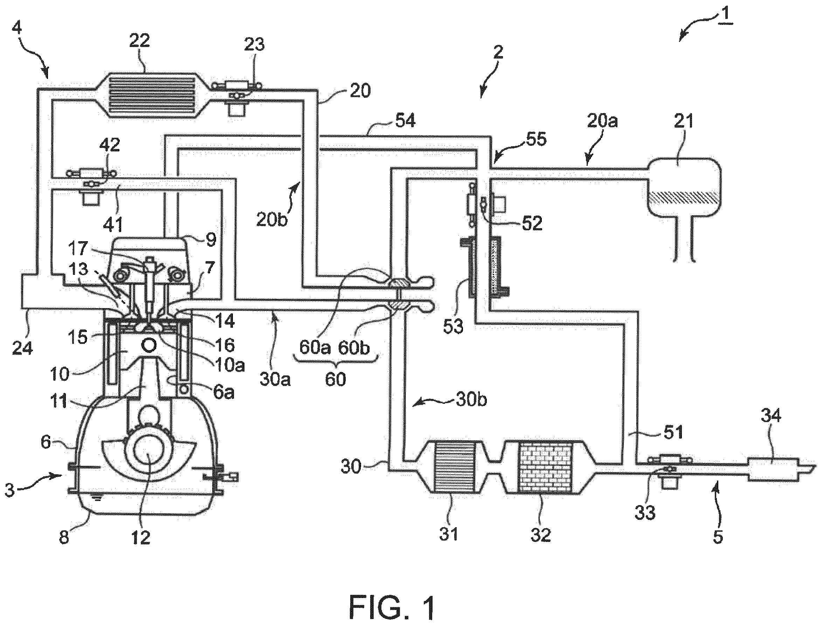

Fig. 1 is a diagram illustrating a schematic structure of an engine 2 according to this embodiment. The engine 2 is mounted on a vehicle 1. In this embodiment, the vehicle 1 is an automobile. The engine 2 is preferably an inline multi-cylinder diesel engine and includes an engine body 3, an intake system 4, and an exhaust system 5. The intake and exhaust systems 4 and 5 of this embodiment may be referred to as the intake and exhaust system.

The engine body 3 includes a cylinder block 6 preferably formed with a plurality of cylinders 6a (only one cylinder 6a is illustrated in Fig. 1), a cylinder head 7 mounted on the cylinder block 6, an oil pan 8 disposed below the cylinder block 6, and a head cover 9 covering the cylinder head 7.

Each of the plurality of cylinders 6a formed in the cylinder block 6 accommodates a piston 10 reciprocatable in up-and-down directions of the engine. Atop surface of the piston 10 forms one of surfaces defining a combustion chamber 10a in the engine body 3.

The piston 10 is connected to a connecting rod 11 extending downwardly. A crankshaft 12 is pivotably supported by a lower end of the connecting rod 11 to be rotatable in conjunction with the reciprocation of the piston 10.

The cylinder head 7 is formed with an intake port 13 and an exhaust port 14 opening to each combustion chamber 10a. At least one intake valve 15 is disposed at an opening section of the intake port 13 to communicate this section to the combustion chamber 10a, and at least one exhaust valve 16 is disposed in an opening section of the exhaust port 14 to communicate this section to the combustion chamber 10a.

Further, an injector 17 which injects fuel into the combustion chamber 10a is disposed in the cylinder head 7 for each cylinder 6a. The injector 17 is arranged such that its nozzle port (fuel injection port) faces the top surface of the piston 10.

The intake system 4 has an intake passage 20 connected to the intake port 13 of the engine body 3. A compressor 60a of a turbocharger 60 (may be referred to as "booster") is disposed in the intake passage 20. The intake passage 20 includes an upstream intake passage 20a located upstream of the compressor 60a and a downstream intake passage 20b located downstream of the same, in a flow direction of intake air (air).

Note that in the description of the intake passage 20, "upstream (side)" and "downstream (side)" are defined based on the flow direction of air (intake air) unless otherwise specified. Similarly, for description of an exhaust passage 30, EGR passages 41 and 51 and a blow-by gas passage 54 given later, "upstream (side)" and "downstream (side)" are defined based on a flow direction of gas inside each passage unless otherwise specified.

A throttle valve 23, an intercooler 22, and a surge tank 24 are provided in the downstream intake passage 20b. The intercooler 22 is provided to cool the air compressed by the compressor 60a of the turbocharger 60.

The throttle valve 23 adjusts an amount of air supplied to the combustion chamber 10a through the intake passage 20. Note that in this embodiment, the throttle valve 23 is basically controlled to be fully opened or close to fully opened during operation of the engine 2, and is substantially closed only when necessary, such as when the engine 2 is stopped.

The surge tank 24 is preferably provided at a position immediately upstream of a connecting portion of the intake passage 20 with the intake port 13, to level an air flow rate into the plurality of combustion chambers 10a.

The exhaust system 5 has the exhaust passage 30 connected to the exhaust port 14 of the engine body 3. A turbine 60b of the turbocharger 60 is interposed in the exhaust passage 30. During operation of the engine 2, the turbine 60b rotates by the exhaust gas discharged from the engine body 3, and the compressor 60a connected to the turbine 60b rotates together with the turbine 60b to compress the air in the intake passage 20.

The exhaust passage 30 includes an upstream exhaust passage 30a located upstream of the turbine 60b of the turbocharger 60 and a downstream exhaust passage 30b located downstream of the same.

A DOC (Diesel Oxidation Catalyst) 31, a DPF (Diesel Particulate Filter) 32, an exhaust shutter valve 33, and a silencer 34 are preferably provided in the downstream exhaust passage 30b. The DOC 31 detoxifies CO and HC within the exhaust gas discharged from the engine body 3 by oxidizing them, and the DPF 32 corresponds to the "exhaust gas purifier," and collects fine particles (e.g., soot) contained within the exhaust gas.

The exhaust shutter valve 33 is preferably provided between the DPF 32 and the silencer 34 in the downstream exhaust passage 30b and controls a flow rate of the exhaust gas discharged outside through the silencer 34.

The engine 2 is also preferably provided with an HP-EGR (High Pressure-Exhaust Gas Recirculation) passage 41, an LP-EGR (Low Pressure-Exhaust Gas Recirculation) passage 51, and the blow-by gas passage 54.

The HP-EGR passage 41 is provided to connect the upstream exhaust passage 30a to the downstream intake passage 20b. For example, the HP-EGR passage 41 is provided to connect a position of the upstream exhaust passage 30a immediately downstream of a connecting point with the exhaust port 14 and on the upstream side of the turbine 60b, to a position of the downstream intake passage 20b between the intercooler 22 and the surge tank 24. The HP-EGR passage 41 recirculates a portion of high-pressure exhaust gas discharged from the combustion chamber 10a to the downstream intake passage 20b. The HP-EGR passage 41 is preferably provided with an EGR valve 42 which adjusts the amount of exhaust gas recirculated to the downstream intake passage 20b.

The LP-EGR passage 51 is provided to connect the downstream exhaust passage 30b with the upstream intake passage 20a. For example, the LP-EGR passage 51 is provided to connect a position of the downstream exhaust passage 30b between the DPF 32 and the exhaust shutter valve 33, with a position of the upstream intake passage 20a between an air cleaner 21 and the compressor 60a.

The LP-EGR passage 51 may be referred to as the "EGR passage." An EGR valve 52 and an EGR cooler 53 are preferably provided in this LP-EGR passage 51. The exhaust gas passing through the LP-EGR passage 51 is cooled by the EGR cooler 53 and then recirculated to the upstream intake passage 20a according to an opening of the EGR valve 52.

The blow-by gas passage 54 returns the blow-by gas generated in the engine body 3 to the upstream intake passage 20a and is provided to connect the head cover 9 of the engine body 3 with the upstream intake passage 20a. The blow-by gas returned to the upstream intake passage 20a is mixed with fresh air (air) and sent to the combustion chamber 10a.

Although not clearly illustrated in Fig. 1, the blow-by gas passage 54 is connected to the upstream intake passage 20a at a position 55 immediately upstream of the turbocharger 60 (compressor 60a).

### [Specific Structure of Engine]

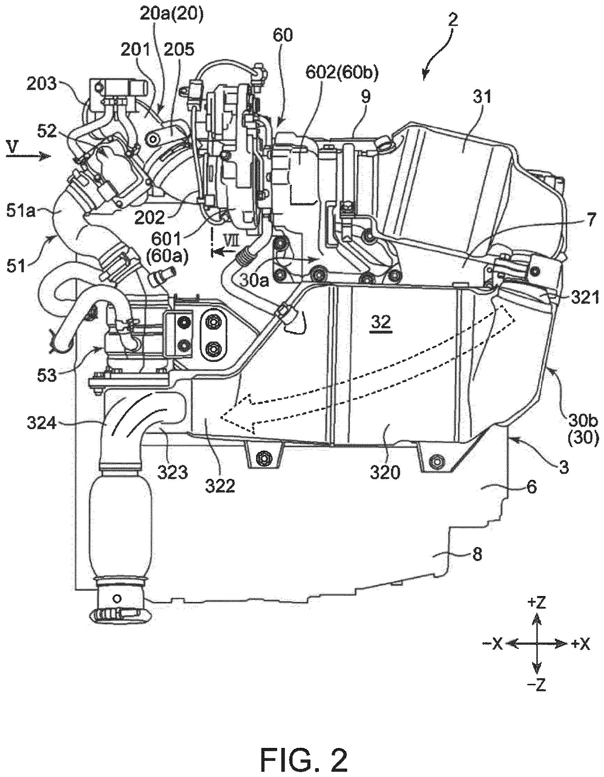

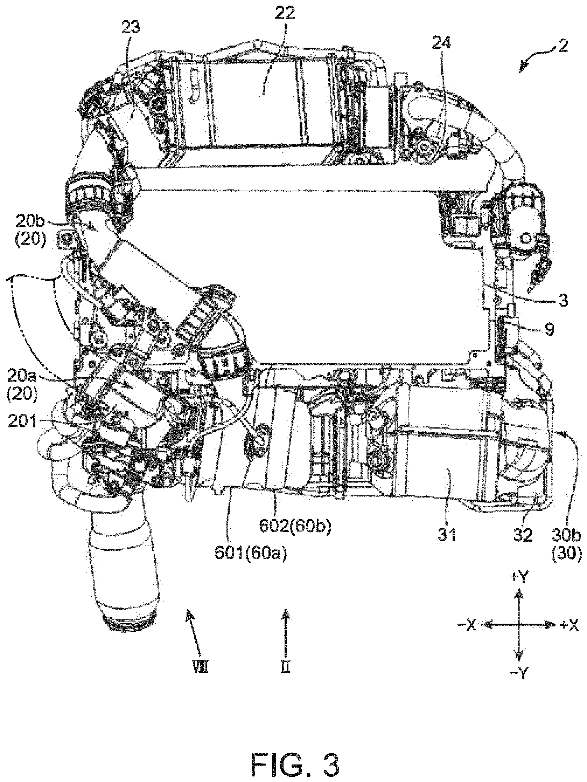

Next, the more specific structure of the engine 2 will be described. Fig. 2 is a side view of the engine 2 (a view seen in the direction II of Fig. 3), and Fig. 3 is a plan view of the engine 2.

In Fig. 2 and subsequent drawings, an X, Y, Z orthogonal coordinate system is illustrated to clarify directions. In this embodiment, the engine 2 is mounted on the vehicle 1 with the axial direction of the cylinder 6a substantially coinciding with up-and-down directions of the vehicle 1. Therefore, the Z directions coincide with the up-and-down directions of the vehicle 1 and the engine 2 (i.e., vertical directions), and the X directions coincide with a lined-up direction of the cylinders 6a in the engine 2. Further, the Y directions coincide with width directions of the engine 2 (i.e., horizontal directions), the -Y side is the exhaust side of the engine 2 (the side where the exhaust port 14 is formed), the +Y side is the intake side of the engine 2 (the side where the intake port 13 is formed).

As illustrated in Figs. 2 and 3, the exhaust system 5 is disposed on a -Y side surface of the engine body 3. For example, the turbocharger 60 is disposed at a position on the -Y side surface of the engine body 3, near an end part of a +Z side of a center part in the X directions. The turbocharger 60 is arranged so that a connecting shaft (not illustrated) between the turbine 60b and the compressor 60a extends substantially in the X directions i.e., horizontally, the turbine 60b is located on the +X side and the compressor 60a is on the -X side with respect to each other. A reference character 601 in Fig. 2 indicates a compressor housing accommodating the compressor 60a, and a reference character 602 indicates a turbine housing accommodating the turbine 60b.

An upstream end part of the downstream exhaust passage 30b is connected to the turbocharger 60 (compressor housing 601). The downstream exhaust passage 30b is disposed to extend to the +X side along the -Y side surface of the engine body 3 and be inverted by 180° at an end part of the engine body 3 on the +X side (hereinafter, "the end part of the X/Y/Z side" may simply referred to as "the X/Y/Z end part"). Specifically, the DOC 31 is disposed adjacent to the +X side of the turbocharger 60, and the DPF 32 is disposed adjacent to the -Z side of the turbocharger 60 and the DOC 31. The DOC 31 and the DPF 32 are directly connected to each other at the +X end part of the engine body 3.

The DPF 32 extends substantially in the X directions and is disposed over an area from a +X end part of the DOC 31 to a -X end part of the turbocharger 60. The DPF 32 has a rectangular main body part 320, an exhaust gas inlet part 321 located its end part at the +X and +Z sides, and an exhaust gas outlet part 322 located at an end part of the main body part 320 at the -X and -Z sides. The inlet part 321 has a through-hole substantially in the Z directions and introduces the exhaust gas in the -Z direction. The outlet part 322 has a tubular shape extending from an end portion of the main body part 320 to the -X side and has a penetrating opening in the X directions. Thus, the exhaust gas is led out in the -X direction. With this configuration, in the DPF 32, as indicated by a dashed arrow in Fig. 2, a main stream of the exhaust gas flows obliquely from the upstream side to the downstream side of the DPF 32, flows along a -Z side inner surface (inner bottom surface) of the DPF 32, and is finally led out from the outlet part 322.

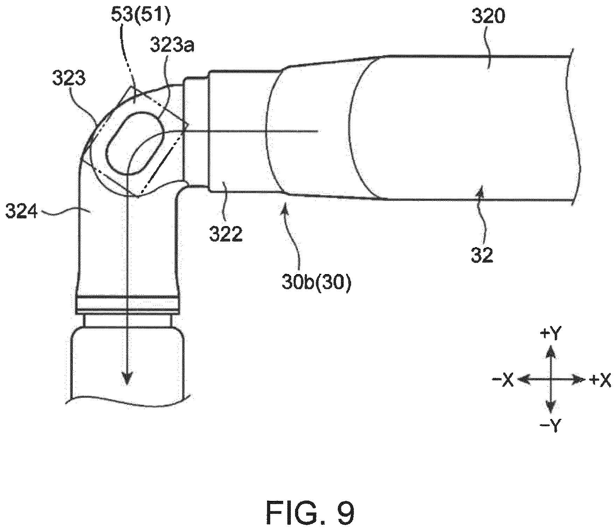

The downstream exhaust passage 30b includes a branch part 323 connected to the outlet part 322 of the DPF 32 that branches a channel of the exhaust gas in the up-and-down directions, and a guide part 324 which corresponds to the "guide" is connected to the branch part 323 and guides the exhaust gas from the branch part 323 to the -Y side as well as the -Z side. As described later, an upstream end part of the LP-EGR passage 51 is connected to a +Z side surface (upper surface) of the branch part 323. That is, the downstream exhaust passage 30b curves by about 90° on the downstream side of the DPF 32 (see Fig. 9), and this curve forms the branch part 323. In this branch part 323, the channel of the exhaust gas is branched into the guide part 324 and the LP-EGR passage 51. Note that in Figs. 2 and 3, the silencer 34 is omitted.

As illustrated in Fig. 3, the throttle valve 23, the intercooler 22 and the surge tank 24 of the downstream intake passage 20b are preferably arranged along the +Y side surface of the engine body 3. Further, a part of the downstream intake passage 20b downstream of the throttle valve 23 is disposed to pass through the +Z end surface of the engine main body 3, and an upstream end part of the downstream intake air passage 20b is connected to the turbocharger 60 (compressor housing 601).

The upstream intake passage 20a is preferably disposed on the -X side of the downstream intake passage 20b, on the +Z end surface of the engine body 3. A downstream end part of the upstream intake passage 20a is connected to the turbocharger 60 (the compressor housing 601).

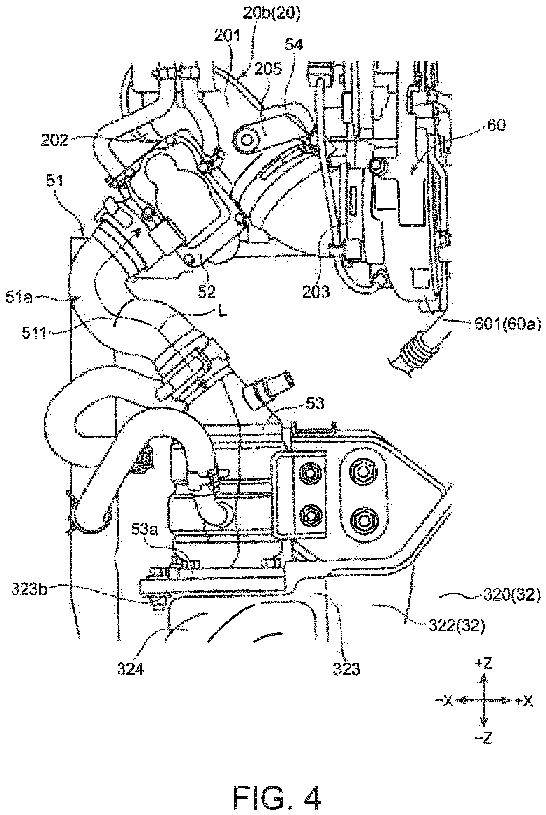

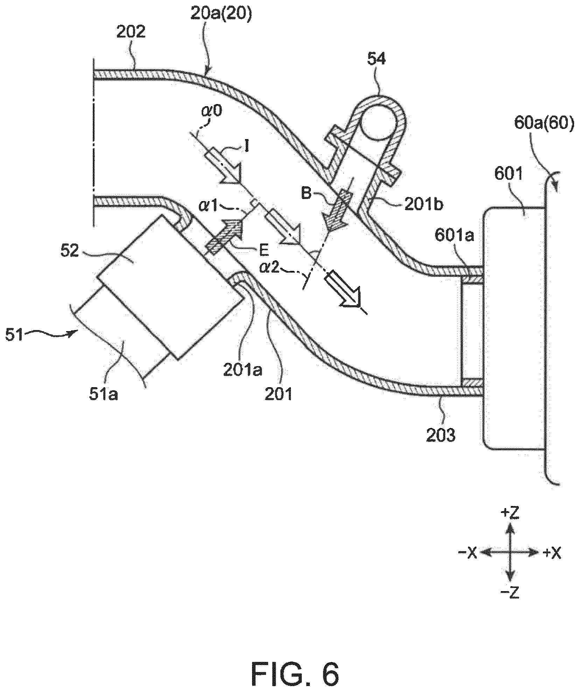

As illustrated in Figs. 2 and 4, the upstream intake passage 20a is provided in its part immediately upstream (-X side) of the connecting point with the turbocharger 60, with an inclining part 201 extending from the upstream to downstream side (-X side to +X side) while shifting to the -Z side, i.e., inclined obliquely downwardly. On the upstream side and the downstream side of the inclining part 201, horizontal parts 202 and 203 extending substantially horizontally (the upstream horizontal part 202 and the downstream horizontal part 203) are continuously provided, respectively. The downstream horizontal part 203 is connected to a cylindrical suction port 601a (see Fig. 6) projecting from a side surface (a -X side surface) of the compressor housing 601. Thus, the upstream intake passage 20a is connected to the turbocharger 60.

As illustrated in Fig. 2, the inclining part 201 of the upstream intake passage 20a and the branch part 323 of the downstream intake passage 20b are opposed to each other substantially in the Z directions. Further, the LP-EGR passage 51 is disposed along the -Y side surface of the engine body 3, and the inclining part 201 is communicated to the branch part 323 by the LP-EGR passage 51.

As illustrated in Fig. 4, the LP-EGR passage 51 extends substantially in the Z directions, and a downstream end part thereof in the flow direction of the EGR gas is connected to a -Z side surface (lower portion) of the inclining part 201, while an upstream end part is connected to a +Z side surface (upper portion) of the branch part 323. More specifically, the LP-EGR passage 51 has the EGR valve 52 at its downstream end part and the EGR cooler 53 at its upstream end part. The EGR valve 52 is preferably directly connected to the -Z side surface of the inclining part 201, and the EGR cooler 53 is preferably directly connected to the +Z side surface of the branch part 323.

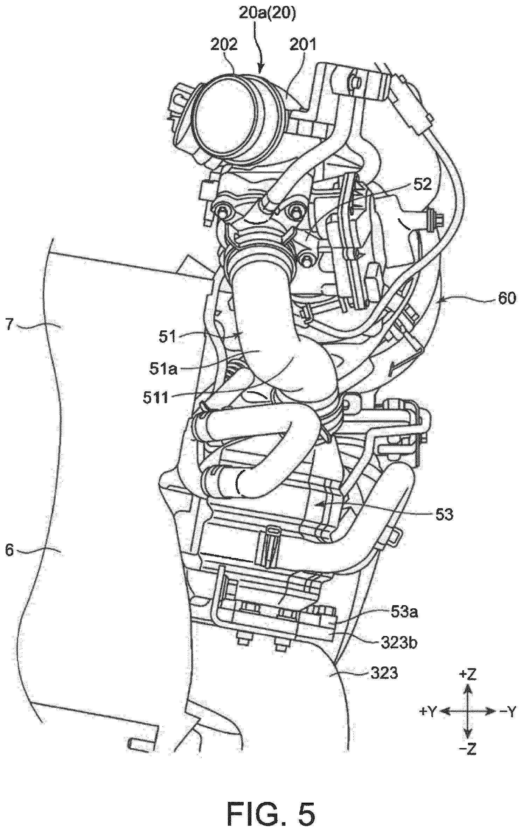

A part of the LP-EGR passage 51 between the EGR valve 52 and the EGR cooler 53, that is, a part connecting the EGR valve 52 to the EGR cooler 53 (referred to as a connecting passage 51a) is structured by an elastic pipe member. As illustrated in Figs. 4 and 5, the connecting passage 51a extends from the EGR cooler 53 to the +Z side and curves (a curved portion 511) at an intermediate position thereof. As a result, a length L of the connecting passage 51a is longer than a case where the EGR valve 52 and the EGR cooler 53 are connected linearly. Note that, the curved portion 511 curves without curving below the horizontal plane. In other words, the curved portion 511 has a shape in which the downstream side is located on the +Z side of (higher than) the upstream side thereof. Note that, the definition of "curve" used here includes a gentle curve, a sharp curve, and a bend.

As illustrated in Fig. 6, a tube-shaped first port portion 201a is provided to project from the -Z side surface of the upstream end section of the inclining part 201 of the upstream intake passage 20a. The EGR valve 52 is connected to the first port portion 201a. The first port portion 201a is provided so that its axis (center axis) a1 intersects an axis á0 of the inclining part 201 at a substantially right angle. As a result, the EGR gas (an arrow E in Fig. 6) mixes with air flowing through the inclining part 201 (an arrow I in Fig. 6) at a substantially right angle.

Further, a tube-shaped second port portion 201b is provided to project from the +Z side surface of the inclining part 201, at a position between the first port portion 201a and the turbocharger 60 in the inclining part 201. The blow-by gas passage 54 is connected to the second port portion 201b. The second port portion 201b is slightly offset to the downstream side (the turbocharger 60 side) from the position of the first port portion 201a so as not to overlap with the first port portion 201a in the flow direction of air. Moreover, the second port portion 201b is formed such that its axis a2 intersects the axis line á0 of the inclining part 201 at an acute angle, that is, the blow-by gas is introduced further downstream than in an orthogonal direction to the axis á0 of the inclining part 201 (see an arrow B in Fig. 6).

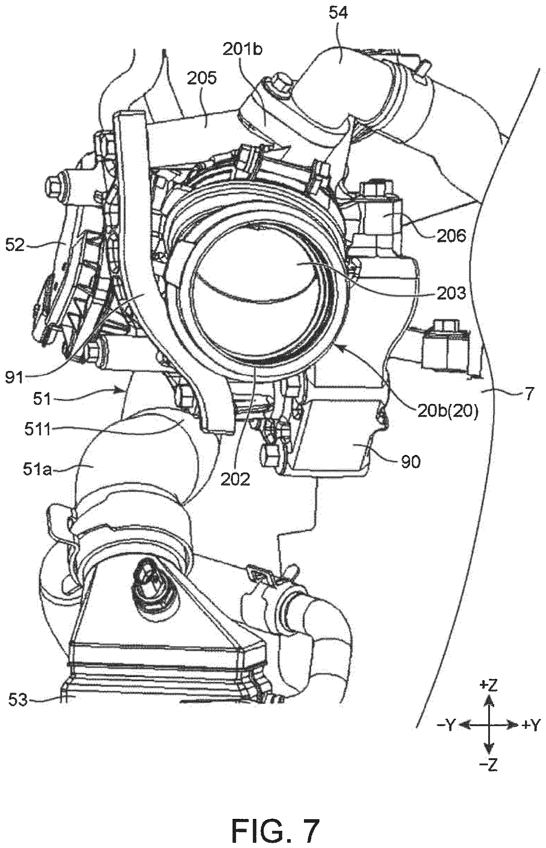

Note that, as illustrated in Fig. 7, the inclining part 201 of the upstream intake passage 20a is supported by the cylinder head 7 via brackets 90 and 91 (the first bracket 90 and the second bracket 91). For example, the first bracket 90 is fixed to the -Y side surface of the cylinder head 7 with bolts, and a downstream end portion of the inclining part 201 is sandwiched between the first bracket 90 and the second bracket 91 fixed on the -Y side (outer side) of the first bracket 90 with bolt(s).

The inclining part 201 is provided with a connecting portion 205 projecting radially outward toward the -Y side from its outer circumferential surface, and a connecting portion 206 projecting to the +Y side. The connecting portion 205 is fixed to the second bracket 91 by bolt(s) and the connecting portion 206 is fixed to the first bracket 90 with bolt(s). As a result, the inclining part 201 is fixed to the brackets 90 and 91 and is supported by the cylinder head 7 via the brackets 90 and 91.

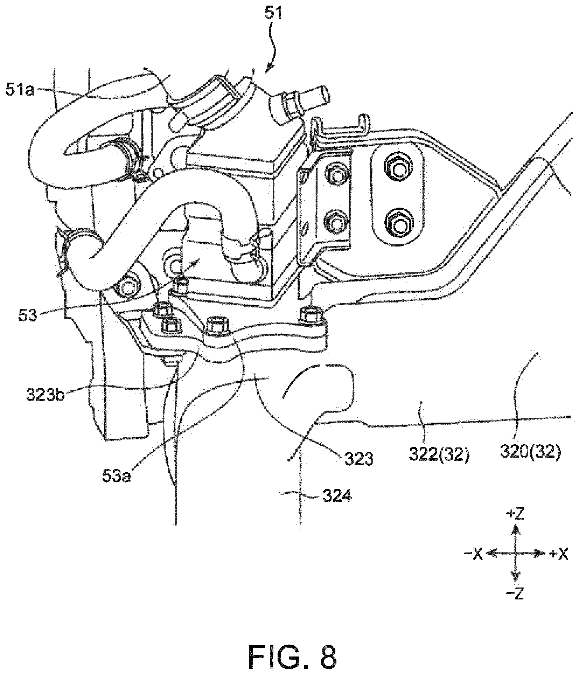

As illustrated in Figs. 4 and 8, the upstream end part of the LP-EGR passage 51, that is, the EGR cooler 53, is connected to the +Z side surface of the branch part 323. For example, an outlet port 323a (see Fig. 9) of the exhaust gas and a flange portion 323b formed to surround the outlet port 323a are provided on the +Z side surface of the branch part 323. Further, the EGR cooler 53 is disposed on the flange portion 323b of the branch part 323, and the flange portion 323b is fastened to a flange portion 53a of the EGR cooler 53 with bolts and nuts.

The EGR cooler 53 has a substantially rectangular shape and exchanges heat with cooling water while circulating the EGR gas in its longitudinal direction. The EGR cooler 53 is fixed to the branch part 323 preferably in a vertically placed state where the EGR gas introduced into the EGR cooler 53 from the branch part 323 through the outlet port 323a flows through the EGR cooler 53 substantially vertically from the -Z side to the +Z side.

Note that a filter (not illustrated) is disposed in the outlet port 323a of the branch part 323 so that when soot remaining within the exhaust gas is introduced into the LP-EGR passage 51, the filter collects the soot.

As illustrated in Fig. 9, the outlet port 323a is formed at a slightly outer corner side of the curved branch part 323 (a smaller curvature side) and has an oval (or ellipse) shape extending in the flow direction of the exhaust gas. On the other hand, the EGR cooler 53 has preferably a rectangular shape in cross section, and the EGR cooler 53 is fixed to the branch part 323 in a state where the outlet port 323a is located at a substantially center of the rectangular cross section and a longitudinal direction of the rectangular cross section coincides with a longitudinal direction of the outlet port 323a. That is, since a major portion of the exhaust gas flows at the outer corner side of the curved branch part 323, in other words, the main stream of the exhaust gas is at the outer corner side of the curved branch part 323, by forming the outlet port 323a at the slightly outer corner side of the branch part 323 which curves as described above, the EGR cooler 53 suitably takes in a required amount of exhaust gas. Further, since the outlet port 323a has the oval shape extending substantially along the flow direction of the exhaust gas, a large amount of exhaust gas is taken into the EGR cooler 53 without causing a flow rate variation, and thus, cooling efficiency of the EGR cooler 53 is improved. Note that for the sake of convenience, the flange portion 323b is omitted in Fig. 9.

### [Operations and Effects]

In the engine 2 described above, the exhaust gas discharged from the exhaust port 14 and passed through the upstream exhaust passage 30a and the turbocharger 60 (turbine 60b) is discharged outside through the downstream exhaust passage 30b (the DOC 31, the DPF 32, the exhaust shutter valve 33, and the silencer 34). Further, a portion of the exhaust gas introduced into the downstream exhaust passage 30b is introduced into the LP-EGR passage 51 from the branch part 323 provided downstream of the DPF 32, and is recirculated to the upstream intake passage 20a through the LP-EGR passage 51.

Here, according to the intake system 4 and the exhaust system 5 of this embodiment, the LP-EGR passage 51 extends substantially in the Z directions, the downstream end part of the LP-EGR passage 51 is connected to the -Z side surface (lower part) of the upstream intake passage 20a, and the upstream end part is connected to the +Z side surface (upper part) of the downstream exhaust passage 30b. Therefore, the condensed water generated in the LP-EGR passage 51 is swiftly discharged to the guide part 324 while flowing along the LP-EGR passage 51.

However, this raises a concern that the condensed water generated in the upstream intake passage 20a is introduced into the LP-EGR passage 51. In this regard, according to the structure of this embodiment, the inclining part 201 is provided on the immediately upstream (-X) side of the connecting point of the upstream intake passage 20a with the turbocharger 60, and the LP-EGR passage 51 is connected to the inclining part 201. Therefore, the introduction of the condensed water into the LP-EGR passage 51 is prevented. That is, in the inclining part 201, the condensed water easily flows along the inclination, and by the air suction into the turbocharger 60, this tendency of condensed water is enhanced. Therefore, even if the condensed water is generated in the upstream intake passage 20a, it mainly moves to the turbocharger 60 side and it becomes more difficult for the condensed water to be introduced into the LP-EGR passage 51. Therefore, it is prevented that the condensed water is introduced into the LP-EGR passage 51 from the upstream intake passage 20a and adheres to the EGR valve, or the condensed water accumulates in the EGR valve 52 when the EGR valve 52 is closed, that is, the condensed water accumulates in the passage section on the +Z side of the EGR valve 52.

Note that in this embodiment, since the blow-by gas passage 54 is connected to the upstream intake passage 20a, it may be considered that the condensed water generated in the blow-by gas passage 54 is introduced into the upstream intake passage 20a together with the blow-by gas. However, in this case, similar to the example given above, the condensed water mainly moves toward the turbocharger 60 along the inclining part 201.

Especially, the blow-by gas passage 54 is connected to the +Z side surface (upper portion) of the inclining part 201 at a position downstream of the connecting position of the LP-EGR passage 51, and the blow-by gas passage 54 is connected to the inclining part 201 to introduce the blow-by gas thereinto to the downstream side. According to this structure, also in the case where the condensed water is introduced into the upstream intake passage 20a (inclining part 201) through the blow-by gas passage 54, the condensed water drops or moves to the position downstream of the connecting position with the LP-EGR passage 51 all the time. Therefore, the condensed water introduced into the upstream intake passage 20a together with the blow-by gas is rarely introduced into the LP-EGR passage 51 and accumulates at the EGR valve 52.

Further in this embodiment, the EGR valve 52 is provided in the downstream end part of the LP-EGR passage 51 and the EGR valve 52 is directly connected to the inclining part 201, which also prevents the condensed water from accumulating at the EGR valve 52. In other words, the longer the distance from the connecting position of the LP-EGR passage 51 with the inclining part 201 to the EGR valve 52 is, the space for the condensed water to accumulate on the downstream side of the EGR valve increases, which may cause accumulation of a larger amount of condensed water. However, according to this embodiment, by directly connecting the EGR valve 52 to the inclining part 201, this space is reduced as small as possible. Therefore, the EGR valve 52 is prevented from accumulating condensed water, and even if it does, the accumulation amount is small. Thus, it can be said that the accumulation of the condensed water at the EGR valve 52 is prevented.

Moreover, in this embodiment, by providing the EGR cooler 53 in the upstream end part of the LP-EGR passage 51, the EGR valve 52 and the EGR cooler 53 are separated widely from each other. Therefore, even when the condensed water is generated within the EGR gas after being cooled by passing through the EGR cooler 53, the condensed water flows along the connecting passage 51a before reaching the EGR valve 52. Especially in this embodiment, since the connecting passage 51a curves (curved portion 511) in its intermediate location, the condensed water flowing together with the EGR gas collides against the wall surface at the curved portion 511 and thus is separated from the EGR gas. That is, the wall surface at the curved portion 511 functions as a baffle plate. Therefore, it is effectively prevented that the condensed water generated in the LP-EGR passage 51 flows through the EGR valve 52 together with the EGR gas and adheres to the EGR valve 52 or accumulates at the EGR valve 52.

Note that, the curved portion 511 curves without curving below the horizontal plane, i.e., has a shape in which the upstream side is located on the -Z side of (below) the downstream side thereof. Therefore, although the baffle plate is provided at the intermediate location of the connecting passage 51a, no inconvenience, such as the condensed water accumulated in the curved portion 511, occurs from this.

Thus, according to this embodiment, the accumulation of the condensed water at the EGR valve 52 of the LP-EGR passage 51 is effectively prevented. Even if it does accumulate, the accumulation amount is small. Therefore, an issue such as the condensed water accumulated in the EGR valve 52 freezes to cause a valve malfunction, is effectively prevented.

Additionally, according to this embodiment, the EGR cooler 53 of the LP-EGR passage 51 is directly connected to the branch part 323 of the downstream intake passage 20b in the vertically placed state as described above (where the EGR gas flows vertically). According to this structure, the condensed water is mainly generated at the position closest possible to the upstream exhaust passage 30a, and the condensed water swiftly flows along the EGR cooler 53 in the Z directions (to the -Z side). Therefore, the condensed water generated by the EGR cooler 53 is introduced into the downstream exhaust passage 30b as swiftly as possible. Especially, when the EGR valve 52 is closed, by the exhaust gas flowing in the guide part 324 from the DOC 31 through the branch part 323, the suction effect (ejector effect) of the condensed water inside the EGR cooler 53 is obtained. Thus, the condensed water generated in the EGR cooler 53 is swiftly introduced into the downstream exhaust passage 30b.

Note that in the above structure in which the EGR valve 52 and the EGR cooler 53 are placed at both ends of the LP-EGR passage 51 to be separated from each other, it is a concern that a relatively large amount of condensed water is generated inside the connecting passage 51a, which is introduced into the downstream exhaust passage 30b through the EGR cooler 53, and the condensed water backflows (enters into) the DPF 32. However, in this embodiment, the downstream exhaust passage 30b includes the branch part 323 connected to the outlet part 322 of the DPF 32, and the guide part 324 connected to the branch part 323 which guides the exhaust gas from the branch part 323 to the -Z side. The LP-EGR passage 51 is connected to the +Z side surface (upper portion) of the branch part 323. According to this structure, while the engine 2 operates, the exhaust gas is discharged from the outlet part 322 of the DPF 32 and flows to the guide part 324 via the branch part 323. Therefore, the condensed water flows to the branch part 323 through the outlet port 323a from the EGR cooler 53, joins the flow of the exhaust gas in the branch part 323 and flows downstream while being guided to the guide part 324. Moreover, in the DPF 32, as indicated by the dashed arrow in Fig. 2, the exhaust gas flows obliquely to the downstream side from the upstream side, and as the exhaust gas further flows along the inner surface at the -Z side (inner bottom surface) of the DPF 32, it is led out from the tubular-shaped outlet part 322 extending in the X directions. Thus, a relatively strong flow of exhaust gas is formed in the portion from the outlet part 322 over the branch part 323, and the condensed water does not easily backflow from the LP-EGR passage 51 to the DPF 32. As a result, an issue such as the condensed water backflowing from the LP-EGR passage 51 to the DPF 32, which causes corrosion of the DPF 32, is effectively prevented.

Note that with the structure of this embodiment in which the EGR valve 52 of the LP-EGR passage 51 is directly connected to the inclining part 201 of the upstream intake passage 20a, the weights of the EGR valve 52 and the connecting passage 51a concentrate in the inclining part 201, and therefore, sufficient support rigidity of the upstream intake passage 20a needs to be secured. In this regard, according to this embodiment, since the inclining part 201 is fixed to the cylinder head 7 via the brackets 90 and 91, the sufficient support rigidity is secured. Therefore, although it is structured such that the EGR valve 52 and the connecting passage 51a are suspended from the upstream intake passage 20a (inclining part 201), the upstream intake passage 20a is stably provided to the engine body 3.

### [Modifications]

(1) Although in the above embodiment the EGR valve 52 is provided to the downstream end part of the LP-EGR passage 51, it may be provided to a further upstream position. Further, although the EGR cooler 53 is provided in the upstream end part of the LP-EGR passage 51, it may be provided at a further downstream position. Note that as in the above embodiment, according to the structure in which the EGR valve 52 and the EGR cooler 53 are placed at both ends of the LP-EGR passage 51 to be separated from each other, the accumulation of the condensed water in the passage section on the +Z side of the EGR valve 52 is prevented, the section between the EGR valve 52 and the EGR cooler 53 is used to effectively let the condensed water flow down, and the condensed water generated inside the EGR cooler 53 is swiftly introduced into the downstream exhaust passage 30b. Therefore, in effectively preventing the condensed water from adhering to or accumulating at the EGR valve 52, the structure as in the above embodiment is suitable.

(2) Although in the above embodiment the guide part 324 of the downstream exhaust passage 30b is provided so as to guide the exhaust gas from the branch part 323 to the -Y side as well as the -Z side, it is not limited to this. For example, the guide part 324 may guide the exhaust gas from the branch part 323 simply to the -Z side. That is, the guide part 324 may guide the exhaust gas discharged from the outlet part 322 to the -Z side with respect to the outlet part 322.

(3) Although in the above embodiment the EGR cooler 53 is arranged so that the EGR gas flows vertically (Z directions), it is not limited to this, e.g., the EGR gas may flow obliquely to +Z side or flow in X directions. Note that to swiftly introduce the condensed water generated inside the EGR cooler 53 toward the downstream exhaust passage 30b, the configuration as in the above embodiment is suitable.

(4) Although in the above embodiment the multi-cylinder diesel engine is adopted as one example of the engine body 3, it is not limited to this. For example, the number of cylinders may be one, and the type of engine may be a gasoline engine. Moreover, the shape of the engine is also not limited to an inline type, and instead, a V-type, a W-type or a horizontally opposed shape may be adopted.

### DESCRIPTION OF REFERENCE CHARACTERS

- 1: Vehicle
- 2: Engine
- 3: Engine Body
- 4: Intake System
- 5: Exhaust System
- 20: Intake Passage
- 20a: Upstream Intake Passage
- 20b: Downstream Intake Passage
- 30: Exhaust Passage
- 30a: Upstream Exhaust Passage
- 30b: Downstream Exhaust Passage
- 31: DOC
- 32: DPF (Exhaust Gas Purifier)
- 51: LP-EGR Passage (EGR Passage)
- 52: EGR Valve
- 53: EGR Cooler
- 54: Blow-by Gas Passage
- 60: Turbocharger
- 60a: Compressor
- 60b: Turbine
- 201: Inclining Part

## Claims

1. An intake and exhaust system (4, 5) for an engine (2) mounted on a vehicle (1), comprising:
an intake passage (20) and an exhaust passage (30); and
an exhaust gas recirculation (EGR) passage (51) configured to introduce a portion of exhaust gas to the intake passage (20) as EGR gas,
wherein the exhaust passage (30) includes:
an exhaust gas purifier (32), including an inlet part (321) and an outlet part (322) for the exhaust gas, that is configured to be disposed so that the exhaust gas flows substantially horizontally when mounted in the vehicle (1);
a branch part (323) connected to the outlet part (322) of the exhaust gas purifier (32) in which a channel of the exhaust gas is branched into a guide part (324) and the EGR passage (51);
wherein the guide part (324) is configured to guide the exhaust gas from the branch part (323) to the exhaust side (-Y) of the engine (2) as well as downward (-Z) when mounted in the vehicle, and
wherein the EGR passage (51) includes an EGR cooler (53) provided to an upstream end part thereof in a flowing direction of the EGR gas, **characterised in that**
the EGR cooler (53) is provided so that the EGR gas flows substantially vertically when mounted in the vehicle, and is connected to an upper surface of the branch part (323) such that it guides the EGR gas substantially upward when mounted in the vehicle.

2. The system of claim 1, wherein , the EGR cooler (53) is directly connected to the branch part (323).

3. The system of any one of the preceding claims, wherein the exhaust gas purifier (32) is provided with the outlet part (322) at a first end part the in horizontal direction and the inlet part (321) at a second end part above the outlet part (322), the outlet part (322) being disposed at a lower end part of the exhaust gas purifier (32) and extending substantially horizontally from the lower end part.

4. An internal combustion engine having an intake and exhaust system (4, 5) according to any one of the preceding claims.

## Patentansprüche

1. Ein Einlass- und Auslasssystem (4, 5) für einen an einem Fahrzeug (1) montierten Motor (2), das Folgendes umfasst:
einen Einlasstrakt (20) und einen Auslasstrakt (30); und
einen Abgasrückführungs (AGR) - Trakt (51), der konfiguriert ist, um einen Teil des Abgases als AGR-Gas in den Einlasstrakt (20) einzuleiten,
wobei der Auslasstrakt (30) Folgendes enthält:
einen Abgasreiniger (32), der ein Einlassteil (321) und ein Auslassteil (322) für das Abgas beinhaltet, der konfiguriert ist, um so angeordnet zu sein, dass das Abgas im Wesentlichen horizontal strömt, wenn er im Fahrzeug (1) montiert ist;
ein Verzweigungsteil (323), das mit dem Auslassteil (322) des Abgasreinigers (32) verbunden ist, in dem ein Kanal des Abgases in ein Führungsteil (324) und den AGR-Trakt (51) verzweigt ist;
wobei der Führungsteil (324) so konfiguriert ist, dass es das Abgas vom Verzweigungsteil (323) zur Auslassseite (-Y) des Motors (2) sowie nach unten (-Z) führt, wenn er im Fahrzeug montiert ist, und
wobei der AGR-Trakt (51) einen AGR-Kühler (53) beinhaltet, der an einem stromaufwärtigen Endteil davon in einer Strömungsrichtung des AGR-Gases bereitgestellt ist, **dadurch gekennzeichnet, dass**
der AGR-Kühler (53) so bereitgestellt wird, dass das AGR-Gas im Wesentlichen vertikal strömt, wenn er im Fahrzeug montiert ist, und mit einer oberen Fläche des Verzweigungsteils (323) so verbunden ist, dass er das AGR-Gas im Wesentlichen nach oben führt, wenn er im Fahrzeug montiert ist.

2. Das System nach Anspruch 1, wobei der AGR-Kühler (53) direkt mit dem Verzweigungsteil (323) verbunden ist.

3. Das System nach irgendeinem der vorstehenden Ansprüche, wobei der Abgasreiniger (32) mit dem Auslassteil (322) an einem ersten Endteil in horizontaler Richtung und dem Einlassteil (321) an einem zweiten Endteil oberhalb des Auslassteils (322) versehen ist, wobei der Auslassteil (322) an einem unteren Endteil des Abgasreinigers (32) angeordnet ist und sich vom unteren Endteil ausgehend im Wesentlichen horizontal erstreckt.

4. Ein Verbrennungsmotor mit einem Einlass- und Auslasssystem (4, 5) nach irgendeinem der vorstehenden Ansprüche.

## Revendications

1. Un système d'admission et d'échappement (4, 5) pour un moteur (2) monté sur un véhicule (1), comprenant :
un passage d'admission (20) et un passage d'échappement (30) ; et
un passage de recirculation des gaz d'échappement (RGE) (51) configuré pour introduire une partie des gaz d'échappement dans le passage d'admission (20) en tant que gaz RGE,
sachant que le passage d'échappement (30) inclut :
un purificateur de gaz d'échappement (32), incluant une partie d'entrée (321) et une partie de sortie (322) pour le gaz d'échappement, qui est configuré pour être disposé de manière que le gaz d'échappement s'écoule de façon essentiellement horizontale lorsqu'il est monté dans le véhicule (1) ;
une partie de dérivation (323) reliée à la partie de sortie (322) du purificateur de gaz d'échappement (32), dans laquelle un canal des gaz d'échappement est ramifié en une partie de guidage (324) et le passage RGE (51) ;
sachant que la partie de guidage (324) est configurée pour guider les gaz d'échappement depuis la partie de dérivation (323) jusqu'au côté échappement (-Y) du moteur (2) ainsi que vers le bas (-Z), lorsqu'elle est montée dans le véhicule, et
sachant que le passage RGE (51) inclut un refroidisseur RGE (53) prévu auprès d'une partie d'extrémité amont de celui-ci dans une direction d'écoulement du gaz RGE, **caractérisé en ce que**
le refroidisseur RGE (53) est fourni de manière que le gaz RGE s'écoule de façon essentiellement verticale lorsqu'il est monté dans le véhicule, et est connecté à une surface supérieure de la partie de dérivation (323) de manière qu'il guide le gaz RGE essentiellement vers le haut lorsqu'il est monté dans le véhicule.

2. Le système d'après la revendication 1, sachant que le refroidisseur RGE (53) est directement relié à la partie de dérivation (323).

3. Le système d'après l'une quelconque des revendications précédentes, sachant que le purificateur de gaz d'échappement (32) est muni de la partie de sortie (322) au niveau d'une première partie d'extrémité dans la direction horizontale et de la partie d'entrée (321) au niveau d'une deuxième partie d'extrémité au-dessus de la partie de sortie (322), la partie de sortie (322) étant disposée au niveau d'une partie d'extrémité inférieure du purificateur de gaz d'échappement (32) et s'étendant de manière essentiellement horizontale à partir de la partie d'extrémité inférieure.

4. Un moteur à combustion interne présentant un système d'admission et d'échappement (4, 5) d'après l'une quelconque des revendications précédentes.
